# EUROPEAN PATENT SPECIFICATION

(11) **EP 2 527 168 B1**
(45) Date of publication and mention of the grant of the patent: **10.08.2016**
(21) Application number: 12168818.8
(22) Date of filing: 22.05.2012
(51) Int. Cl.: B60D 1/28, B60D 1/58

(54) **Towing device, particularly for trailers, equipment and machines in general**
Abschleppvorrichtung, insbesondere für Anhänger, Ausrüstung und Maschinen im Allgemeinen
Dispositif de remorquage en particulier pour des remorques, équipement et machines en général

(30) Priority: 26.05.2011 IT MO20110134
(43) Date of publication of application: 28.11.2012
(73) Proprietor: CBM - S.P.A., 41122 Modena (IT)
(72) Inventor: Cornia, Enrico Maria, 41121 Modena (IT)
(74) Representative: Brunacci, Marco

(56) References cited:
- EP-A1- 1 488 942
- EP-A1- 1 616 727
- DE-U1-202004 013 345
- DE-U1-202010 014 352
- US-A1- 2009 039 619

## Description

The present invention relates to a towing device, particularly for trailers, equipment and machines in general.

Towing devices connected to a tractor at the rear for towing a vehicle without a motor, such as for example trailers and/or farm machines, are known.

These devices of the known type are composed mainly of a towing element, constituted generally by a spherical element with a vertical axis, on which the end portion of a drawbar of the trailer to be towed is accommodated.

A locking element is present, proximate to the towing element, which can move between an active position, in which the locking element is arranged proximate to the drawbar in order to lock it, and an inactive position, in which the locking element is spaced further from the drawbar than in the active position for the accommodation or release of the drawbar on the towing element.

For facilitating the arrangement of these devices at different heights with respect to the position of the corresponding drawbar to be towed, these devices are provided laterally with a pair of longitudinal guides which can be associated slidingly and coupled with respective straight guides, which are substantially perpendicular to the ground and provided on the rear of the tractor.

A towing device for trailers is described in detail in Italian Patent no. 0001350511 and in the corresponding European Patent EP1616727 in the name of the same applicant as the present application, in which the locking element, which is substantially L-shaped, has a lower end that can detachably engage a locking pin. The lower end of the locking element has two semicircular recesses on two opposite sides spaced by a short straight portion, while the locking pin has a cylindrical shape with a semicircular cross-section with a flat portion.

The rotation of the locking element and the consequent rotation of the locking pin allow locking said locking element in different configurations, including an active configuration and an inactive configuration, which can be obtained by means of the engagement of the circular surface alternatively with one of the semicircular recesses of the locking element.

In the active position, the locking element is close to the towing element, arranging an upper end thereof on the extraction projection of the drawbar, thus avoiding accidental extraction thereof, whereas in the inactive position the upper end of the locking element is spaced from the extraction projection of the drawbar, creating no geometric constraint for the resting or extraction of the drawbar of the trailer.

Moreover, the locking pin is provided with a cantilevered transverse lever, which is pivoted in said locking pin and can engage a safety notch for locking the locking pin so as to avoid accidental rotation thereof with consequent extraction of the drawbar.

This device of the known type is not free from drawbacks, including the fact that the transition between the active position and the inactive position requires the simultaneous movement of the locking element and the cantilevered transverse lever, requiring the simultaneous use of both hands by the operator.

The operator, in fact, after placing the drawbar proximate to the device, must arrange the drawbar on the ground in order to move the locking element to the inactive position and only then can he arrange the end part of the drawbar on the towing element by picking it up from the ground. Finally, the operator must lock the locking element on the end of the drawbar by acting at the same time on said locking element and on the cantilevered transverse lever.

Another drawback of this device of the known type consists in that it requires the execution of release and locking operations in tight spaces, because the cantilevered transverse lever, arranged substantially between the locking element and the lateral longitudinal guides, requires a movement and a subsequent rotation toward the lateral longitudinal guides, where maneuvering space is extremely limited.

This drawback is aggravated further if one considers the field of use of the device, since during its use, by not being protected from the outside environment, it can be covered by mud or lubricant usually used on the towing element, reducing significantly the grip of the cantilevered transverse lever on the part of the operator, who in these conditions is unlikely to be able to operate it, which necessitates a cleaning step for facilitating its grip.

EP 1 488 942 discloses the preamble of claim 1 and shows a towing device comprising a main body which can be associated with a tractor at the rear and a towing element which extends from the main body for the detachable engagement of a drawbar of a vehicle to be towed, and a locking element which is pivotable to said main body for the locking of the drawbar with respect to said towing element.

The aim of the present invention is to provide a towing device, particularly for trailers, equipment and machines in general, which obviates the drawbacks and overcomes the limitations of the known background art, making it possible to secure easily the end part of a drawbar to a tractor, requiring operation on only one point and consequently leaving free one hand of the operator.

Within this aim, an object of the present invention is to provide a device that makes it possible to perform locking and release operations in larger maneuvering spaces than devices of the known type.

Another object of the invention is to provide a device that is capable of giving the greatest assurances of reliability and safety in use.

Another object of the invention is to provide a device that is easy to provide and economically competitive if compared with the background art.

This aim and other objects which will become more apparent hereinafter are achieved by a towing device according claim 1.

Further characteristics and advantages of the present invention will become more apparent from the description of a preferred but not exclusive embodiment of a towing device, particularly for trailers, equipment and machines in general, illustrated by way of non-limiting example by means of the accompanying drawings, wherein:

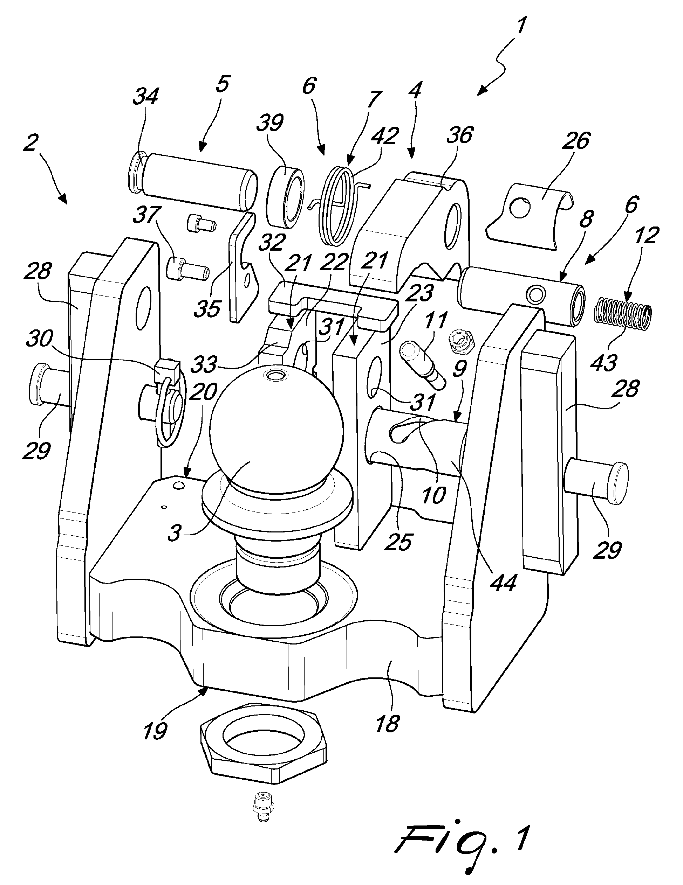

Figure 1 is an elevated exploded perspective view of an embodiment of a towing device, particularly for trailers, equipment and machines in general, according to the invention;
Figure 2 is a top plan view of the device according to the invention;
Figure 3 is a sectional view, taken along the line III-III, of the device shown in Figure 2;
Figure 4 is a sectional view, taken along the line IV-IV, of the device shown in Figure 2 in the active position;
Figure 5 is a sectional view, taken along the line IV-IV, of the device shown in Figure 2 in the inactive position.

With reference to the cited figures, a towing device, particularly for trailers, equipment and machines in general, generally designated by the reference numeral 1, comprises a main body 2 which can be connected to a tractor at the rear and a towing element 3 for the detachable engagement of a drawbar 100 of a vehicle or trailer to be towed.

The device 1 comprises, moreover, a locking element 4, which is pivoted to the main body 2 about a corresponding hinge pivot 5 for the locking of the drawbar 100 with respect to the towing element 3, which can be obtained by the rotation of the locking element 4 from an inactive position, in which the drawbar 100 is released, to an active position, in which the drawbar 100 is locked.

According to the invention, the device 1 comprises manually actuated release elements 6 for automatic transition from the active position to the inactive position described above.

Conveniently, the release elements 6 comprise at least first elastic means 7 and a release pin 8.

In particular, the first elements 7 are interposed between the main body 2 and the locking element 4 for the elastic return of the locking element 4 from the active position to the inactive position, while the release pin 8 is associated slidingly in a sliding seat 9 for transition between a locking position, in which the release pin 8 is in contact with the locking element 4 to prevent the rotation thereof, and a release position, in which the release pin 8 is spaced from the locking element 4, allowing the rotation thereof about a pivoting axis 40 of the hinge pivot 5.

Moreover, a handle 11 extends radially from the release pin 8 for the manual movement of the release pin 8 along a sliding axis 41 from the locking position to the release position.

Vice versa, transition from the release position to the locking position is performed automatically thanks to the presence of second elastic means 12 interposed between a reaction end 13 of the sliding seat 9 and the release pin 8.

The sliding seat 9, with its tubular body 44, is jointly connected, by means of an open end 24 thereof, which is opposite to the reaction end 13, to an outer face 23 of a fork 21 that extends from said main body 2.

Moreover, the tubular body 44 has, on its outer surface, an opening 10 defined according to a substantially helicoidal shape in which the handle 11 is guided so that it can slide.

In particular, the main body 2 comprises a substantially flat supporting plate 18, which has a towing element 3 on a first end portion 19 and, on a second end portion 20, which is spaced from the first one, two elongated forks 21 which extend at right angles to said supporting plate 18 and are arranged so as to be mutually parallel and facing each other with two respective inner faces 22. The two inner faces 22 are mutually connected by means of the hinge pivot 5.

Both forks 21 have, between the hinge pivot 5 and the supporting plate 18, a passage hole 25 which connects the respective inner faces 22 to the respective outer faces 23 of each fork 21, which are opposite to the inner faces 22. Only one of the forks 21 has a passage hole 25 at the sliding seat 9 for the passage of the release pin 8 through said passage hole 25.

In addition to this, a fixing plate 35 is connected to at least one of the two forks 21. The fixing plate 35, in turn, is jointly engaged in translation with the hinge pivot 5 so as to prevent its axial translation along the pivoting axis 40, allowing instead its rotation about said axis.

The locking element 4 is partially accommodated between the two forks 21 and is pivoted about the pivoting axis 40 of the hinge pivot 5 by means of an intermediate hole 16.

In particular, the locking element 4 comprises an upper arm 14, the length of which can be compared to the distance between the forks 21 and the center of the towing element 3 and a lower arm 15. The upper arm 14 and the lower arm 15 are arranged substantially along planes which are perpendicular to each other and the intermediate hole 16 is interposed between them.

Moreover, the locking element 4 has an accommodation hole 27 for the accommodation of an end of the first elastic means 7.

More particularly, the first elastic means 7 comprise a helical torsion spring 42 fitted on the hinge pivot 5 and the second elastic means 12 comprise a helical compression spring 43.

In this particular embodiment, the main body 2 is composed of a supporting plate 18 with a substantially rectangular plan shape from which, along planes which are perpendicular to the supporting plate 18, a pair of prisms 28 which can be associated slidingly with straight guides present on the rear of a generic tractor extends laterally. The prisms 28 have respectively a through hole which accommodates a fixing pin 29 which can engage the straight guide of the tractor and can engage detachably the prism 28 by means of a common latched pin 30 with a chain.

The first end portion 19 and the second end portion 20 are present on the center line of the supporting plate 18, at the same distance from the pair of prisms 28, and the towing element 3 and the forks 21 extend from said portions respectively and in the same direction as the pair of prisms 28.

In particular, the towing element 3 is composed of a spherical pivot with a lower cylindrical end coupled to the supporting plate 18 by means of threaded elements of a known type. Conveniently, the towing element 3 has a grease channel that passes through its longitudinal axis and connects its base, where a grease fitting nut known to the person skilled in the art is installed, to the tip of the spherical pivot adapted for contact with the end of the drawbar 100 of the trailer.

The two forks 21, having a substantially cylindrical shape with a rectangular base and extending along a longitudinal axis which is perpendicular to the supporting plate 18, have a hinge hole 31 in which the hinge pivot 5 is accommodated and, between the hinge pivot 5 and the supporting plate 18, the passage hole 25.

The hinge pivot 5 has, at one end which protrudes from the hinge hole 31 of a fork 21, a groove 34 on which a fixing plate 35 is accommodated which prevents its axial translation along the pivoting axis 40, allowing instead its rotation about said axis.

Conveniently, the fixing plate 35 is fixed to the fork 21 by means of threaded elements of a known type.

The two forks 21 have, on two upper faces, not in contact with the supporting plate 18, a connecting plate 32, which connects structurally the two forks 21 in order to consolidate the trilith structure formed by the connecting plate 32 and the two forks 21. Moreover, a recess 33 is present on one of the upper faces of the two forks 21.

The locking element 4 is associated rotatably about the hinge pivot 5, is substantially L-shaped, the upper arm 14 and the lower arm 15 extending at the ends of said L-shape. In particular, the upper arm 14 has, at its base, proximate to the connecting plate 32, a stroke limiting notch 36 and laterally a stroke limiting abutment 37 which comprises a protruding body. The lower arm 15 has instead, at a tip end 17, a curved profile adapted to adhere partially to the release pin 8.

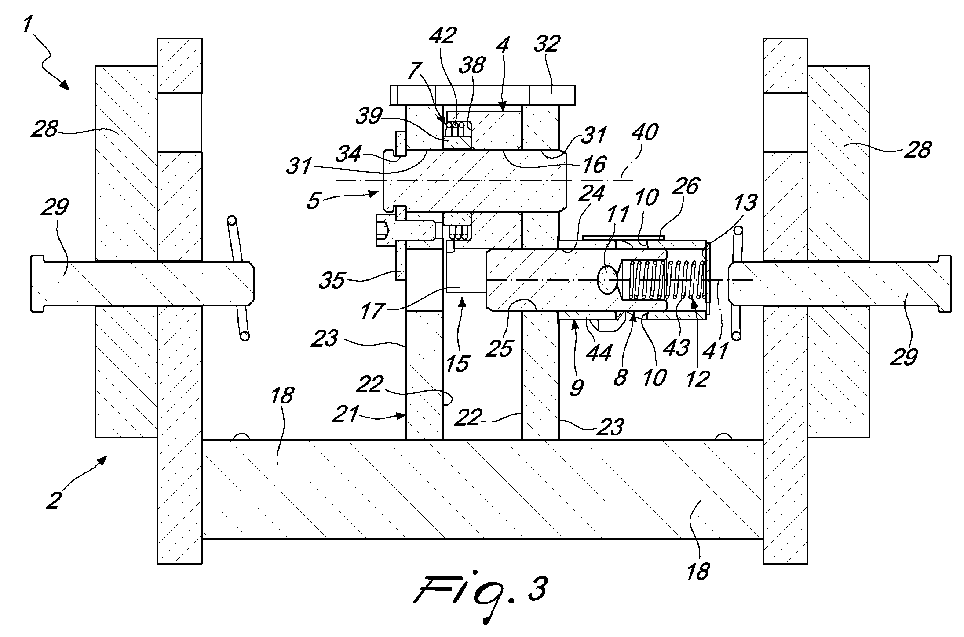

Moreover, the locking element 4 has laterally, proximate to the intermediate hole 16, a circular notch 38 for accommodating the helical torsion spring 42. Said helical torsion spring 42 is arranged perimetrically to the hinge pivot 5 and is spaced from it thanks to the interposition of a cylindrical bush 39, as shown in Figure 3.

The helical torsion spring 42 comprises a first end, which engages the accommodation hole 27 of the locking element 4, and a second end, which engages a parking notch formed in one fork 21.

Finally, the release pin 8 is composed of a cylindrical body with a circular cross-section, which is radially perforated and in which a handle 11 is accommodated which is fixed to the release pin 8 by means of threaded elements of a known type. The release pin 8 slides along the sliding axis 41 inside the tubular body 44 of the sliding seat 9; the tubular body 44 is jointly connected laterally, by means of its open end 24, to the edges of the passage hole and accommodates, between the reaction end 13 and the release pin 8, the helical compression spring 43.

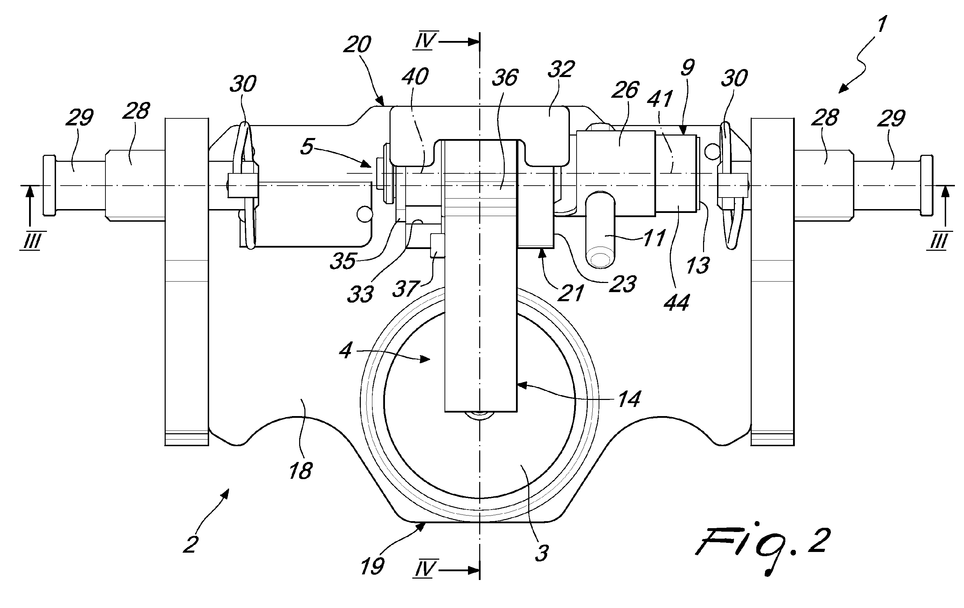

A semicircular protection 26 is interposed between the handle 11 and the outer surface of the tubular body 44 and partly circumscribes said sliding seat 9. The protection 26 is long enough to cover the opening 10, as shown in Figure 2.

The operation of the towing device 1, particularly for trailers, equipment and machines in general, is described hereinafter.

After arranging the device 1 at a suitable working height by sliding the pair of prisms 28 in the straight guides provided on the tractor and after subsequent locking, by means of the fixing pins 29 fastened by means of the corresponding latched pins 30 with a chain, one proceeds in sequence in order to allow the accommodation of the drawbar 100 of the trailer on the device 1.

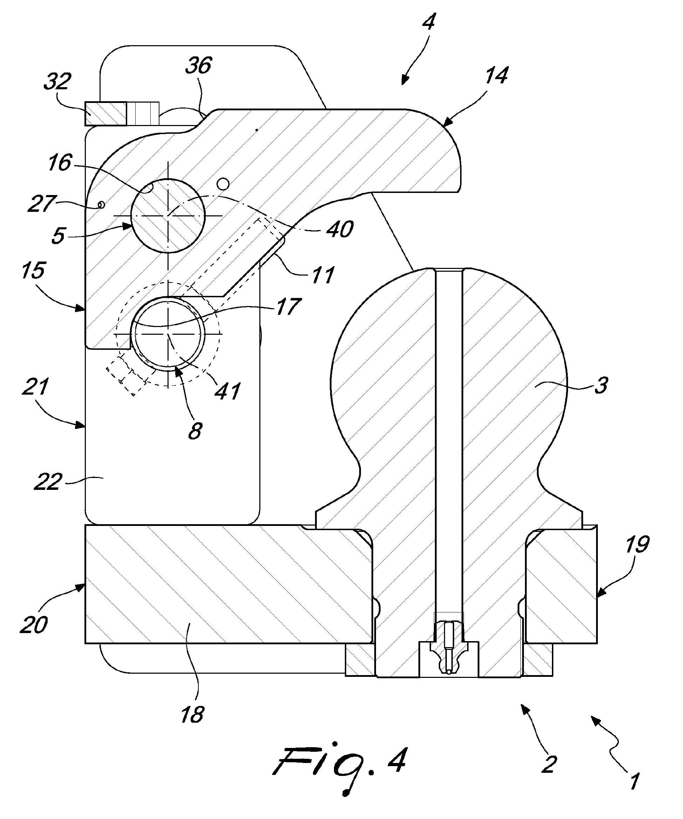

The device 1 is in the active position, as shown in Figure 4. In order to pass to the inactive position and consequently fasten the drawbar 100, the operator moves the handle 11 outward with respect to the main body 2. The release pin 8, controlled by the handle 11, moves along the sliding axis 41, retracting into the passage hole 25 and into the tubular body 44, eliminating the coupling that prevents the counterclockwise rotation of the locking element 4 about the pivoting axis 40, as shown in Figure 4.

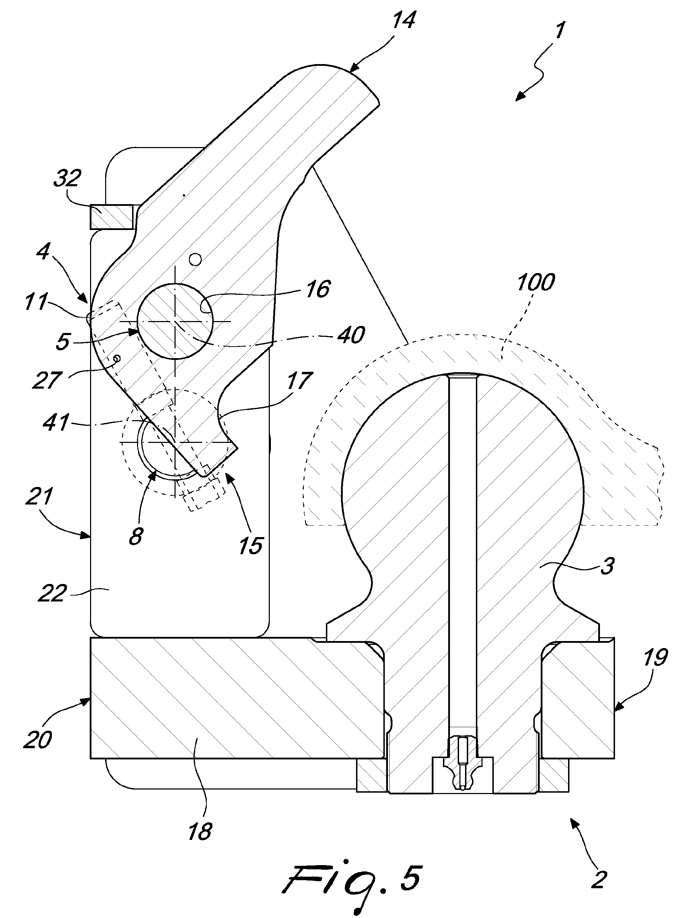

Accordingly, the locking element 4, under the action of the helical torsion spring 42, rotates counterclockwise about the pivoting axis 40, bringing the locking element 4 to the inactive position, as shown in Figure 5.

This rotation is limited by the presence of the connecting plate 32 which strikes the stroke limiting notch 36 arranged at the base of the upper arm 14. In this position, moreover, the lower arm 15 is arranged in front of the passage hole 25, preventing the exit of the release pin 8 from the tubular body 44 pushed by the helical compression spring 43 once the handle 11 has been released.

Conveniently, retention of the locking element 4 in the inactive position is ensured by the helical torsion spring 42, which despite the described rotation that has been performed, is still tensioned.

Simultaneously with the arrangement of the locking element 4 in the inactive position, the operator can rest the drawbar 100 of the trailer on the spherical pivot.

Subsequently, in order to fasten the drawbar 100 to the device 1, the operator must return the locking element 4 into the active position.

This operation is performed easily by pushing the upper arm 14 downward, i.e., in a clockwise direction about the pivoting axis 40 shown in Figure 5. Overcoming the force of the helical torsion spring 42, the rotation of the locking element 4 begins up to the end of its stroke, where the stroke limiting abutment 37, laterally to the locking element 4, abuts against the recess 33, further limiting the rotation of the locking element 4.

This rotation about the pivoting axis 40 allows the movement also of the lower arm 15, which by no longer obstructing the passage hole 25 allows the release pin 8 to exit under the action of the helical compression spring 43, which is arranged again in contact with the tip end 17, preventing a counterclockwise rotation of the locking element 4 about the pivoting axis 40.

The maximum stroke of the release pin 8 along the sliding axis 41 is defined by the length of the opening 10 in which the handle 11 is accommodated. During the movement of the handle 11, the protection 26 follows the movement without creating any friction, protecting the opening 10 against any mud that might be propelled onto the device 1 during the work of the tractor.

Finally, to release the drawbar 100 of the trailer from the device 1, the locking element 4 must be returned to the inactive position in the manner described above.

In practice it has been found that the towing device, particularly for trailers, equipment and machines in general according to the present invention fully achieves the intended aim and objects, since it makes it possible to fasten easily the end part of a trailer to a tractor, requiring operation on one single point, i.e., only on the handle of the release pin of the device, without operating simultaneously also on the locking element. The possibility for the operator to use only one hand in order to actuate the device allows the operator to use the other hand to retain and accommodate the drawbar of the trailer directly on the spherical element, without having to arrange on the ground and then subsequently pick up again the drawbar of the trailer, providing a faster fastening and release. Moreover, the operator can actuate other instruments while he is working with just one hand on the device.

Another advantage of the device according to the invention consists in that it is possible to perform the locking and release operations easily in larger maneuvering spaces than previous devices, because the handle that extends radially offers optimum and easy grip even if it is covered with mud or lubricant. In fact, the operator only has to actuate the handle with a movement which is substantially parallel to the locking element and the side walls of the device. The device allows the operator to perform a movement which is parallel to the locking element and to the side walls along a direction which is free from geometric constraints and in which the maneuvering space is large.

The towing device, particularly for trailers, equipment and machines in general, thus conceived is susceptible of numerous modifications and variations, all of which fall within the scope of the appended claims.

In practice, the materials used, as long as they are compatible with the specific use, as well as the contingent shapes and dimensions, may be any according to requirements.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A towing device (1), particularly for trailers, equipment and machines in general, comprising a main body (2) which can be associated with a tractor at the rear and a towing element (3) which extends from said main body (2) for the detachable engagement of a drawbar (100) of a vehicle to be towed, a locking element (4) being further comprised which is pivoted to said main body (2) about a corresponding hinge pivot (5) for the locking of said drawbar (100) with respect to said towing element (3), said locking element (4) being movable from an active position, in which said drawbar (100) is locked, to an inactive position, in which said drawbar (100) is released, and vice versa, said device further comprising manually actuated release elements (6) for the automatic transition of said locking element (4) from said active position to said inactive position, where said release elements (6) comprise at least first elastic means (7) which are interposed between said main body (2) and said locking element (4) for the elastic return of said locking element (4) from said active position to said inactive position, and where said release elements (6) comprise at least one release pin (8), which is accommodated slidingly in a sliding seat (9) for transition from a locking position, in which said release pin (8) is arranged in contact with said locking element (4) to prevent the rotation of said locking element (4) about said hinge pivot (5), and a release position, in which said release pin (8) is spaced from said locking element (4) for the rotation of said locking element (4) about said hinge pivot (5), and vice versa,
**characterized by** the fact that said sliding seat (9) is defined by a tubular body (44), which is connected to said main body (2) and comprises an opening (10) which is defined on its outer surface with a substantially helical shape
and by the fact of comprising a handle (11) which extends radially from said release pin (8), said handle (11) being guided slidingly in said opening (10) for the manual maneuvering of said release pin (8) from said locking position to said release position.

2. The device (1) according to claim 1, **characterized in that** said hinge pivot (5) is oriented substantially at right angles to the extraction direction of said drawbar (100) from said towing element (3), said locking element (4) comprising an upper arm (14) and a lower arm (15), which are arranged substantially along mutually perpendicular planes, and comprising an intermediate hole (16), which is interposed substantially between said upper arm (14) and said lower arm (15), said intermediate hole (16) accommodating said hinge pivot (5).

3. The device (1) according to one or more of the preceding claims, **characterized in that** said first elastic means (7) comprise a helical torsion spring (42) which is fitted on said hinge pivot (5) and is associated at its ends with said main body (2) and with said locking element (4).

4. The device (1) according to one or more of the preceding claims, **characterized in that** it comprises second elastic means (12) for the automatic transition of said release pin (8) from said release position to said locking position.

5. The device (1) according to claim 4, **characterized in that** said second elastic means (12) comprise a helical compression spring (43), which is interposed between a reaction end (13) of said sliding seat (9) and said release pin (8).

6. The device (1) according to one or more of the preceding claims, **characterized in that** said main body (2) comprises a supporting plate (18), which has a first end portion (19) and a second end portion (20) which are mutually spaced by a length which is substantially equal to the length of said upper arm (14), said first end portion (19) comprising said towing element (3) and said second end portion (20) comprising two forks (21) which are mutually spaced along the pivoting axis (40) of said hinge pivot (5), said two forks (21) having respective internal faces (22) which face each other and are arranged on parallel planes and mutually associated by said hinge pivot (5).

7. The device (1) according to claim 6, **characterized in that** said sliding seat (9) is connected to an outer face (23), which is opposite to one of said inner faces (22), of one of said two forks (21) by means of an open end (24), which is opposite to said reaction end (13), said fork (21) having a passage hole (25) at said sliding seat (9) for the passage of said release pin (8).

8. The device (1) according to claim 6 or 7, **characterized in that** the sliding axis (41) of said sliding seat (9) is substantially parallel to said pivoting axis (40) and is arranged between said pivoting axis (40) and said supporting plate (18).

9. The device (1) according to one or more of claims from 6 to 8, **characterized in that** it has a fixing plate (35) which is connected to at least one of said two forks (21) and is engaged with said hinge pivot (5), said fixing plate (35) being jointly connected, in translation, to said hinge pivot (5) along said pivoting axis (40).

## Patentansprüche

1. Eine Abschleppvorrichtung (1), insbesondere für Anhänger, Ausrüstung und Maschinen im Allgemeinen, umfassend einen Hauptkörper (2), der mit einem Traktor am hinteren Ende verbunden werden kann, sowie ein Abschlepp-Element (3), das sich von dem Hauptkörper (2) zur lösbaren Verbindung einer Kupplungsstange (100) eines abzuschleppenden Fahrzeugs aus erstreckt, ferner umfassend ein Verriegelungselement (4), das an dem Hauptkörper (2) um eine dazugehörige Drehachse (5) angelenkt ist, um die Kupplungsstange (100) in Bezug auf das Abschleppelement (3) zu verriegeln, wobei das Verriegelungselement (4) von einer aktiven Position, in der die Kupplungsstange (100) verriegelt ist, in eine inaktive Position beweglich ist, in der die Kupplungsstange (100) freigegeben ist und umgekehrt, wobei die Vorrichtung ferner manuell betätigte Freigabeelemente (6) für die automatische Überführung des Verriegelungselements (4) von der aktiven Position in die inaktive Position umfasst, wobei die Freigabeelemente (6) zumindest erste elastische Mittel (7) umfassen, die für die elastische Rückkehr des Verriegelungselements (4) von der aktiven Position in die inaktive Position zwischen dem Hauptkörper (2) und dem Verriegelungselement (4) angeordnet sind, und wobei die Freigabeelemente (6) zumindest einen Auslösestift (8) umfassen, der für den Übergang von einer Verriegelungsposition, in der der Auslösestift (8) in Kontakt mit dem Verriegelungselement (4) angeordnet ist, so dass die Drehung des Verriegelungselements (4) um die Drehachse (5) verhindert ist, und einer Freigabeposition, in der der Auslösestift (8) für die Drehung des Verriegelungselements 4 um die Drehachse (5) von dem Verriegelungselement (4) beabstandet ist, und umgekehrt, gleitend in einem Gleitsitz (9) aufgenommen ist,
**dadurch gekennzeichnet, dass** der Gleitsitz (9) durch einen rohrförmigen Körper (44) begrenzt ist, der mit dem Hauptkörper (2) verbunden ist und eine Öffnung (10) umfasst, die an dessen Außenfläche durch eine im Wesentlichen schraubenartige Form begrenzt ist,
und dadurch, dass dieser einen Handgriff (11) umfasst, der sich radial von dem Auslösestift (8) aus erstreckt, wobei der Handgriff (11) zur manuellen Betätigung des Auslösestifts (8) von der Verriegelungsposition in die Freigabeposition gleitend in der Öffnung (10) geführt ist.

2. Die Vorrichtung (1) gemäß Anspruch 1, **dadurch gekennzeichnet, dass** die Drehachse (5) im Wesentlichen rechtwinklig zu der Auszugsrichtung der Kupplungsstange (100) von dem Abschleppelement (3) orientiert ist, wobei das Verriegelungselement (4) einen oberen Arm (14) sowie einen unteren Arm (15) umfasst, die im Wesentlichen entlang zueinander senkrechten Ebenen angeordnet sind, und eine Zwischenöffnung (16) umfasst, die im Wesentlichen zwischen dem oberen Arm (14) und dem unteren Arm (15) angeordnet ist, wobei die Drehachse (5) in der Zwischenöffnung (16) aufgenommen ist.

3. Die Vorrichtung (1) gemäß einem oder mehreren der vorigen Ansprüche, **dadurch gekennzeichnet, dass** die ersten elastischen Mittel (7) eine Schrauben-Torsionsfeder (42) umfassen, die auf der Drehachse (5) angebracht ist und an ihren Enden mit dem Hauptkörper (2) und dem Verriegelungselement (4) verbunden ist.

4. Die Vorrichtung (1) gemäß einem oder mehreren der vorigen Ansprüche, **dadurch gekennzeichnet, dass** diese zweite elastische Mittel (12) für den automatischen Übergang des Auslösestifts (8) von der Freigabeposition in die Verriegelungsposition umfasst.

5. Die Vorrichtung (1) gemäß Anspruch 4, **dadurch gekennzeichnet, dass** die zweiten elastischen Mittel (12) eine Schraubendruckfeder (43) umfassen, die zwischen einem Reaktionsende (13) des Gleitsitzes (9) und dem Auslösestift (8) angeordnet ist.

6. Die Vorrichtung (1) gemäß einem oder mehreren der vorigen Ansprüche, **dadurch gekennzeichnet, dass** der Hauptkörper (2) eine Aufnahmeplatte (18) umfasst, die einen ersten Endabschnitt (19) sowie einen zweiten Endabschnitt (20) aufweist, die durch eine Länge voneinander beabstandet sind, die im Wesentlichen gleich der Länge des oberen Arms (14) ist, wobei der erste Endabschnitt (19) das Abschleppelement (3) umfasst und der zweite Endabschnitt (20) zwei Gabelstücke (21) umfasst, die entlang der Schwenkachse (40) des Drehgelenks (5) voneinander beabstandet sind, wobei die beiden Gabelstücke (21) jeweilige Innenflächen (22) aufweisen, die einander zugewandt und auf parallelen Ebenen angeordnet sind und über das Drehgelenk (5) miteinander verbunden sind.

7. Die Vorrichtung (1) gemäß Anspruch 6, **dadurch gekennzeichnet, dass** der Gleitsitz (9) über ein offenes Ende (24), das dem Reaktionsende (13) gegenüber liegt, mit einer Außenfläche (23), die einer der Innenflächen (22) gegenüberliegt, eines der beiden Gabelstücke (21) verbunden ist, wobei das Gabelstück (21) eine Durchgangsöffnung (25) an dem Gleitsitz (9) für den Durchtritt des Auslösestiftes (8) aufweist.

8. Die Vorrichtung (1) gemäß Anspruch 6 oder 7, **dadurch gekennzeichnet, dass** die Gleitachse (41) des Gleitsitzes (9) im Wesentlichen parallel zu der Schwenkachse (40) ist und zwischen der Schwenkachse (40) und der Aufnahmeplatte (18) angeordnet ist.

9. Die Vorrichtung (1) gemäß einem oder mehreren der Ansprüche 6 bis 8, **dadurch gekennzeichnet, dass** diese eine Fixierplatte (35) aufweist, die mit zumindest einem der beiden Gabelstücke (21) verbunden ist und mit dem Drehgelenk (5) in Eingriff steht, wobei die Fixierplatte (35) mit dem Drehgelenk (5) entlang der Schwenkachse (40) in Translationsverbindung steht.

## Revendications

1. Dispositif d'attelage (1), notamment pour des remorques, équipements et machines en général, comprenant un corps principal (2) qui peut être associé à l'arrière d'un tracteur et à un élément d'attelage (3) qui s'étend dudit corps principal (2) pour l'engagement détachable d'un timon (100) d'un véhicule à tracter, un élément de verrouillage (4) étant en outre compris qui est monté à pivotement sur ledit corps principal (2) autour d'un axe de pivot (5) correspondant pour le verrouillage dudit timon (100) par rapport audit élément d'attelage (3), ledit élément de verrouillage (4) étant mobile depuis une position active, dans laquelle ledit timon (100) est verrouillé, vers une position inactive, dans laquelle ledit timon (100) est libéré, et vice versa, ledit dispositif comprenant en outre des éléments de libération (6) à actionnement manuel pour le passage automatique dudit élément de verrouillage (4) de ladite position active à ladite position inactive, dans lequel lesdits éléments de libération (6) comprennent au moins des premiers moyens élastiques (7) qui sont interposés entre ledit corps principal (2) et ledit élément de verrouillage (4) pour le rappel élastique dudit élément de verrouillage (4) de ladite position active à ladite position inactive, et dans lequel lesdits éléments de libération (6) comprennent au moins un axe de dégagement (8), qui est logé de manière coulissante dans un siège à coulissement (9) pour le passage d'une position de verrouillage, dans laquelle ledit axe de dégagement (8) est agencé en contact avec ledit élément de verrouillage (4) pour empêcher la rotation dudit élément de verrouillage (4) autour dudit axe de pivot (5), vers une position de dégagement, dans laquelle ledit axe de dégagement (8) est éloigné dudit élément de verrouillage (4) pour permettre la rotation dudit élément de verrouillage (4) autour dudit axe de pivot (5), et vice versa,
**caractérisé en ce que** ledit siège à coulissement (9) est défini par un corps tubulaire (44), qui est relié audit corps principal (2) et comprend une ouverture (10) qui est définie sur sa face extérieure par une forme sensiblement hélicoïdale
et **en ce qu'**il comprend un manche (11) qui s'étend radialement dudit axe de dégagement (8), ledit manche (11) étant guidé en coulissement dans ladite ouverture (10) pour la manoeuvre manuelle dudit axe de dégagement (8) depuis ladite position de verrouillage vers ladite position de dégagement.

2. Dispositif (1) selon la revendication 1, **caractérisé en ce que** ledit axe de pivot (5) est orienté sensiblement orthogonalement à la direction d'extraction dudit timon (100) dudit élément d'attelage (3), ledit élément de verrouillage (4) comprenant un bras supérieur (14) et un bras inférieur (15), qui sont agencés sensiblement selon des plans perpendiculaires entre eux, et comprenant un trou intermédiaire (16), qui est interposé sensiblement entre ledit bras supérieur (14) et ledit bras inférieur (15), ledit trou intermédiaire (16) logeant ledit axe de pivot (5).

3. Dispositif (1) selon l'une ou plusieurs des revendications précédentes, **caractérisé en ce que** lesdits premiers moyens élastiques (7) comprennent un ressort de torsion hélicoïdal (42) qui est monté sur ledit axe de pivot (5) et est associé à ses extrémités audit corps principal (2) et audit élément de verrouillage (4).

4. Dispositif (1) selon l'une ou plusieurs des revendications précédentes, **caractérisé en ce qu'**il comprend des seconds moyens élastiques (12) pour le passage automatique dudit axe de dégagement (8) de ladite position de dégagement à ladite position de verrouillage.

5. Dispositif (1) selon la revendication 4, **caractérisé en ce que** lesdits seconds moyens élastiques (12) comprennent un ressort de compression hélicoïdal (43), qui est interposé entre une extrémité de réaction (13) dudit siège à coulissement (9) et ledit axe de dégagement (8).

6. Dispositif (1) selon l'une ou plusieurs des revendications précédentes, **caractérisé en ce que** ledit corps principal (2) comprend une plaque de support (18), qui possède une première portion d'extrémité (19) et une seconde portion d'extrémité (20) qui sont espacées entre elles d'une longueur qui est sensiblement égale à la longueur dudit bras supérieur (14), ladite première portion d'extrémité (19) comprenant ledit élément d'attelage (3) et ladite seconde portion d'extrémité (20) comprenant deux fourches (21) qui sont espacées entre elles sur l'axe de pivotement (40) dudit axe de pivot (5), lesdites deux fourches (21) ayant des faces intérieures (22) respectives qui se font face et sont agencées sur des plans parallèles et associées entre elles par ledit axe de pivot (5).

7. Dispositif (1) selon la revendication 6, **caractérisé en ce que** ledit siège à coulissement (9) est relié à une face extérieure (23), qui est du côté opposé à l'une desdites faces intérieures (22), de l'une desdites deux fourches (21) au moyen d'une extrémité ouverte (24), qui est à l'opposé de ladite extrémité de réaction (13), ladite fourche (21) possédant un trou de passage (25) au niveau dudit siège à coulissement (9) pour permettre le passage dudit axe de dégagement (8).

8. Dispositif (1) selon la revendication 6 ou 7, **caractérisé en ce que** l'axe de coulissement (41) dudit siège à coulissement (9) est sensiblement parallèle audit axe de pivotement (40) et est agencé entre ledit axe de pivotement (40) et ladite plaque de support (18).

9. Dispositif (1) selon l'une ou plusieurs des revendications de 6 à 8, **caractérisé en ce qu'**il possède une plaque de fixation (35) qui est reliée à au moins l'une desdites deux fourches (21) et est en prise avec ledit axe de pivot (5), ladite plaque de fixation (35) étant conjointement reliée, en translation, audit axe de pivot (5) selon ledit axe de pivotement (40).
